(19) Europäisches Patentamt
European Patent Office
Office européen des brevets

(11) Veröffentlichungsnummer: **0 105 843**
**A2**

(12) # EUROPÄISCHE PATENTANMELDUNG

(21) Anmeldenummer: **83810444.6**

(22) Anmeldetag: **03.10.83**

(51) Int. Cl.³: **C 07 F 9/54**
C 07 F 7/22, A 01 N 57/34
A 01 N 55/04, A 61 K 31/66
A 61 K 31/32

(30) Priorität: **06.10.82 CH 5875/82**

(43) Veröffentlichungstag der Anmeldung:
**18.04.84 Patentblatt 84/16**

(84) Benannte Vertragsstaaten:
**BE DE FR GB IT SE**

(71) Anmelder: **CIBA-GEIGY AG**
**Postfach**
**CH-4002 Basel(CH)**

(72) Erfinder: **Wehner, Wolfgang, Dr.**
**Wetzbach 34**
**D-6144 Zwingenberg(DE)**

(72) Erfinder: **Grade, Reinhardt, Dr.**
**Tulpenweg 11**
**D-6140 Bensheim(DE)**

(54) **Phosphonium-Organohalogenstannate (IV).**

(57) Phosphonium-Stannate der Formel I

$$[(R^1)_a(R^2)_bP]^{\oplus}_n\ [R^3_qSnX_rY_t]^{n\ominus}_w \qquad (I),$$

worin die Symbole $R^1$, $R^2$, $R^3$, X, Y, a, b, n, q, r, t und w die in der Beschreibung angegebene Bedeutung haben, sind wirksame Biocide. Sie können sowohl im Materialschutz als auch zum Schutz von Kulturpflanzen verwendet werden. Besonders wertvolle Eigenschaften sind ihre hohe Wasserlöslichkeit und ihre geringe Flüchtigkeit.

EP 0 105 843 A2

Croydon Printing Company Ltd.

CIBA-GEIGY AG 3-14131/+
Basel (Schweiz)

# Phosphonium-organohalogenstannate (IV)

Die vorliegende Erfindung betrifft neue Phosphoniumstannat-Komplexe, welche sich durch sehr gute biocide Wirksamkeit auszeichnen.

Die Verwendbarkeit von Phosphoniumsalzen, Organozinnsalzen und auch diejenige gewisser Phosphonium-Stannate als Biocide ist bekannt.

Eine allgemeine Uebersicht über die Chemie der Organostannat(IV)-Komplexe gibt J.W. Nicholson in Coord.Chem.Rev.47, 263 (1982).

In der US-PS 3.448.127 wird eine allgemeine Methode zur Herstellung von Oniumsalz-Komplexen beschrieben. Phosphonium-Stannate sowie deren Wirksamkeit als Biocide sind allerdings nicht beschrieben.

S.N. Bhattacharya et al, Indian J. Chem., 19A, 592 (1980) offenbart den hier beschriebenen Phosphonium-Stannaten ähnliche Verbindungen.

Aus der US-PS 3.259.541 ist es bekannt, dass Phosphoniumstannate der Formel $[R^1R^2R^3R^4P][Phenyl_3SnXY]$, worin $R^1$-$R^4$ u.a. $C_1$-$C_{12}$ Alkyl und X und Y u.a. Halogen sind, biocide Eigenschaften besitzen.

In der DE-OS 1.802.375 sind ausserdem fungicid wirksame Systeme, bestehend aus einem Phosponium-Stannat und einem Metallsalz eines Alkylen-bis-(dithiocarbamats) beschrieben.

Die vorliegende Erfindung betrifft Phosphonium-Stannate der allgemeinen Formel I

$$[(R^1)_a(R^2)_bP]_n^{\oplus}\,[R_q^3SnX_rY_t]_w^{n\ominus}\quad (I),$$

worin $R^1$ $C_1$-$C_6$ Alkyl, durch eine Hydroxy- oder Cyanogruppe oder eine oder zwei $C_2$-$C_{22}$ Alkoxycarbonyl- oder $C_2$-$C_{22}$ Alkylcarbonyloxygruppen oder durch ein Halogenatom substituiertes $C_1$-$C_6$ Alkyl bedeutet, $C_3$-$C_7$ Cycloalkyl oder Phenyl ist, und $R^2$ Wasserstoff, $C_8$-$C_{22}$ Alkyl, Methylol oder durch eine oder zwei $C_1$-$C_{14}$ Alkylgruppen, durch ein oder zwei Chloratome oder durch eine oder zwei Nitrogruppen substituiertes Benzyl bedeutet oder Benzyl ist, mit der Massgabe, dass $R^1$ nicht Phenyl und $R_3^3$ nicht Methyl, Ethyl, n-Propyl, n-Butyl oder Phenyl ist, oder worin $R^2$ eine Gruppe der Formel II $-ZPR_3^1$ (II) ist, worin $R^1$ die oben angegebene Bedeutung hat und Z eine geradkettige oder verzweigte $(C_{2-22}$-$H_{4-44})$-Gruppe ist, welche ein- oder mehrmals durch -O-, -S-, -O-C(O)-, -C(O)-O- oder $-N(R^4)$- unterbrochen sein kann, wobei $R^4$ Wasserstoff oder $C_1$-$C_4$ Alkyl bedeutet, und $R^3$ die gleiche Bedeutung wie $R^1$ hat, oder ferner Benzyl, durch eine oder zwei $C_1$-$C_{14}$ Alkylgruppen, durch ein oder zwei Chloratome oder durch eine oder zwei Nitrogruppen substituiertes Benzyl oder 2-Methyl-2-phenylpropyl ist, mit der Massgabe, dass die Reste $R^1$ und/oder $R^3$ von Phenyl verschieden sind, wenn X und/oder Y kein Fluor ist, und X und Y unabhängig voneinander Fluor, Chlor, Brom, Iod, Cyanat, Thiocyanat oder Carboxylat der Formel $R^5$-COO- bedeuten, wobei $R^5$ Wasserstoff ist, oder geradkettiges oder verzweigtes $C_1$-$C_{18}$ Alkyl bedeutet, das gegebenenfalls durch ein bis drei Halogenatome oder durch ein bis drei Hydroxy- oder Aminogruppen substituiert sein kann, oder Phenyl ist, das gegebenenfalls durch ein bis drei Halogenatome oder durch ein bis drei Amino-, Nitro-, Hydroxy- oder $C_1$-$C_4$ Alkoxygruppen substituiert ist, oder $C_5$-$C_8$ Cycloalkyl bedeutet oder ein gegebenenfalls substituiertes Pyridin ist, und worin n 1 oder 2 ist, und q 1, 2 oder 3 bedeutet, und a die Werte 3 oder 4 annehmen kann, wobei der Wert 4 nur dann erlaubt ist, wenn X und/oder Y Fluor ist, und b die Werte 1 oder 4 annehmen kann, wobei der Wert 4 nur dann erscheint, wenn X und/oder Y Fluore ist, und die Summe (a+b) stets 4 sein muss, und r und t eine ganze Zahl

von 0 bis 5 ist, wobei die Summe (r+t) 2 bis 5 ist, und die Summe (q+r+t) dem Wert (n+4) entspricht und w, falls $R^2$ eine Gruppe der Formel II ist, 2 bedeutet und sonst 1 ist.

$R^1$ und $R^3$ als $C_1$-$C_6$ Alkyl, $R_2$ als $C_8$-$C_{22}$ Alkyl und $R^5$ als $C_1$-$C_{18}$ Alkyl sind beispielsweise geradkettige oder verzweigte Alkylreste wie Methyl, Ethyl, n-Propyl, Isopropyl, n-Butyl, sek.Butyl, n-Amyl, Isoamyl, n-Hexyl, n-Octyl, 2-Ethylhexyl, Decyl, Undecyl, Dodecyl, Tridecyl, Tetradecyl, Hexadecyl, Octadecyl, Eicosyl oder Docosyl. Mischungen solcher Alkylgruppen wie Tetradecyl und Hexadecyl sind ebenfalls Gegenstand der vorliegenden Erfindung.

Sind $R^1$ und $R^3$ substituiertes $C_1$-$C_6$ Alkyl, so handelt es sich beispielsweise um folgende Reste: Methylol, 2-Hydroxyethyl, 4-Hydroxybutyl, 6-Hydroxyhexyl, Cyanomethyl, 2-Cyanoethyl, 4-Chlorbutyl, Butoxycarbonylethyl, Di(octoxycarbonyl)-methyl, Methoxycarbonylhexyl, Di(butoxycarbonyl)-methyl, Undecylcarbonyloxyethyl, 3-Chlor-2-undecylcarbonyloxy-propyl oder 2-Hydroxy-2-undecylcarboyloxy-ethyl.

$R^1$ und $R^3$ als $C_3$-$C_7$ Cycloalkyl und $R^5$ als $C_5$-$C_8$ Cycloalkyl sind insbesondere Cyclopropyl, Cyclobutyl, Cyclopentyl, Cyclohexyl, Cycloheptyl oder Cyclooctyl, bevorzugt sind Cyclopentyl und Cyclohexyl, besonders bevorzugt Cyclopentyl.

$R^2$ und $R^3$ sind gegebenenfalls substituiertes Benzyl, wie o-, m- oder p-Methylbenzyl, 2,3-, 3,4-, 3,5- oder 2,5-Dimethylbenzyl, Nonylbenzyl, Laurylbenzyl, Tetradecylbenzyl, o-, m- oder p-Chlorbenzyl, 2,3-, 3,4-, 3,5- oder 2,5-Dichlorobenzyl, o-, m- oder p-Nitrobenzyl, 2,3-, 3,4-, 3,5- oder 2,5-Dinitrobenzyl.

Ist $R^2$ eine Gruppe $-ZPR^1_3$, so bedeutet Z z.B. Ethylen, Trimethylen-1,3, Tetramethylen-1,4, Propyliden, $-CH_2CH_2-O-CH_2CH_2-$, $-(CH_2CH_2O)_4CH_2CH_2-$, $-CH_2CH_2-NH-CH_2CH_2-$, $-CH_2CH_2-N(CH_3)-CH_2CH_2-$ oder $-CH_2COOCH_2CH_2-$.

Verbindungen mit $R^2$ als Gruppe $-ZPR^1{}_3$ werden bevorzugt.

$R^4$ ist als $C_1$-$C_4$ Alkyl z.B. Methyl, Ethyl, n-Propyl, Isopropyl, n-Butyl, sec.-Butyl oder t.-Butyl.

Bei $R^5$ als substituiertes $C_1$-$C_{18}$ Alkyl handelt es sich beispielsweise um Methylol, 2-Hydroxyethyl, 4-Hydroxybutyl, 6-Hydroxyhexyl, 2-Hydroxyoctadecyl, Chlormethyl, 2-Chlorethyl, 1,2-Dichlorethyl, 4-Chlorbutyl, 6-Chlorhexyl, 2-Chloroctadecyl, Aminomethyl, 2-Aminoethyl, 4-Aminobutyl, 6-Aminohexyl oder 2-Aminooctadecyl. Bei $R^5$ als substituiertes Phenyl handelt es sich beispelsweise um o-, m- oder p-substituiertes Chloro-, Amino-, Nitro-, Methoxy-, Ethoxy-, n-Propoxy- oder n-Butoxyphenyl, oder um 2,3-, 3,4-, 3,5- oder 2,5-Dichloro-, -Dinitro-, -Diamino-, -Dimethoxy-, -Diethoxy-, -Di-n-propoxy oder -Di-n-butoxyphenyl, oder um 2-Chloro-3-nitrophenyl, um 3-Amino-4-ethoxyphenyl, um 3-Amino-5-ethoxyphenyl oder um 2,4,6-Triaminophenyl, oder auch um 2,4,6-Trichlorophenyl. Als gegebenenfalls substituiertes Pyridin bedeutet $R^5$ beispielsweise Pyridin-2-, -3-oder -4-carbonsäure oder auch 2-, 3- oder 4-Methylpyridin.

Bevorzugte Verbindungen entsprechen der Formel I, worin $R^3$ $C_1$-$C_6$ Alkyl, $C_1$-$C_6$ Mono- oder Dihydroxyalkyl, $C_3$-$C_7$ Cycloalkyl oder 2-Methyl-2-phenylpropyl ist und die übrigen Symbole die angegebene Bedeutung haben.

Besonders bevorzugt sind Verbindungen der Formel I, worin $R^1$ n-Butyl, Methylol oder Phenyl ist und $R^2$ $C_8$-$C_{16}$ Alkyl, 3,4-Dichlorbenzyl oder p-Nitrobenzyl bedeutet und $R^3$ $C_1$-$C_4$ Alkyl, Cyclohexyl oder Phenyl ist, mit der Massgabe, dass die Reste $R^1$ und/oder die Reste $R^3$ von Phenyl verschieden sind, wenn X und/oder Y kein Fluor ist, und die übrigen Symbole die oben angegebene Bedeutung haben.

Insbesondere zu erwähnen sind Verbindungen der Formel I, worin $R^1$ und $R^3$ n-Butyl sind, $R^2$ $C_{12}$-$C_{16}$ Alkyl ist und X und Y unabhängig voneinander Fluor oder Chlor bedeuten, und ausserdem solche, worin

$R^1$ und $R^3$ n-butyl, $R^2$ Tetradecyl, X und Y unabhängig voneinander Fluor oder Chlor bedeuten, q 3 ist und n, r und t 1 sind, oder solche, worin q 3 ist, n und r 2 bedeuten und t 1 ist.

Ebenfalls von Interesse sind Verbindungen der Formel I, worin X und/oder Y Fluor sind. Daneben interessieren Verbindungen der Formel I, worin X und/oder Y Chlor sind. Weiterhin bevorzugt sind Verbindungen der Formel I, worin X und/oder Y Brom sind. Auch finden Verbindungen der Formel I Interesse, bei denen die Reste X und/oder Y Carboxylate der Formel $R^5$-COO- sind, insbesondere jedoch Benzoat, Propionat oder Naphthenat. Ferner interessieren Verbindungen der Formel I, worin $R^1$ und $R^3$ n-Butyl sind, $R^2$ Tetradecyl ist, X und Y Fluor oder Chlor bedeuten und wo n, q, r und t 2 sind.

Auch von Bedeutung sind Verbindungen der Formel I, worin $R^1$ und $R^3$ n-Butyl sind, $R^2$ Tetradecyl bedeutet, X und Y Fluor oder Chlor sind, und wo n, q und t 1 bedeuten, und r den Wert 3 annimmt.

Weitere Beachtung finden Verbindungen der Formel I, worin $R^1$ und $R^3$ n-Butyl sind, $R^2$ $C_{12}$-$C_{16}$ Alkyl bedeutet, X Fluor oder Chlor ist, q 3 ist, r 2 bedeutet, n 1 ist, und t den Wert 0 annimmt.

Verbindungen, worin q 3 ist, werden bevorzugt.

Von Interesse sind weiterhin Verbindungen der Formel V, bei denen der Rest $R^2$ $C_{12}$-$C_{14}$-Alkyl ist.

$$[(C_4H_9)_3PR^2]^{\oplus} [(C_4H_9)_3SnCl_2]^{\ominus} \qquad (V)$$

Ebenfalls bevorzugt werden Verbindungen der Formel VI, bei denen der Rest $R^2$ $C_{12}$-$C_{14}$-Alkyl bedeutet.

$$[(C_4H_9)_3PR^2]^{\oplus} [(C_4H_9)_3SnF_2]^{\ominus} \qquad (VI)$$

Weiterhin interessieren Verbindungen der Formel VII, bei denen der Rest $R^2$ $C_{12}$-$C_{14}$ Alkyl ist.

$$[(C_6H_5)_3PR^2]^{\oplus} \quad [(C_4H_9)_3SnCl_2]^{\ominus} \qquad (VII)$$

Zusätzlich bevorzugt werden Verbindungen der Formel VIII, bei denen der Rest $R^2$ $C_{12}$-$C_{14}$ Alkyl bedeutet.

$$[(C_6H_5)_3PR^2]^{\oplus} \quad [(C_4H_9)_3SnF_2]^{\ominus} \quad (VIII).$$

Die Phosphonium-Stannate der vorliegenden Erfindung können beispielsweise durch Umsetzung von ungefähr n/w Mol eines Phosphoniumsalzes der Formel III

$$[R^1_3R^2P]^{\oplus}X^{\ominus} \qquad (III)$$

worin $R^1$, $R^2$ und X die oben angegebene Bedeutung haben, mit ungefähr einem Mol eines Zinnsalzes der Formel IV

$$R^3_qSnY_t \qquad (IV),$$

worin $R^3$, Y, q und t die oben angegebene Bedeutung haben, hergestellt werden.

Die Phosphoniumhalogenide der Formel III sind Handelsprodukte oder können nach bekannten Methoden aus den entsprechenden Phosphinen und einem organischen Halogenid hergestellt werden. Die Zinnsalze der Formel IV sind ebenfalls im Handel erhältliche Produkte.

Die Reaktion des Phosphoniumhalogenids der Formel III mit dem Organozinnhalogenid wird vorteilhafterweise bei Raumtemperatur mit oder ohne Lösungsmittel, wie etwa Methanol, Ethanol, Chloroform, Aceton, Methylenchlorid, Toluol, Xylol, oder Wasser etc. (homogen oder 2-phasig) durchgeführt. Wird ein Lösungsmittel mitverwendet, so kann dieses nach der Reaktion verdampft werden, oder das Reaktionsprodukt wird z.B. durch Zugabe eines Ethers ausgefällt und das so erhaltene Produkt kann durch Umkristallisation gereinigt werden.

Die Verbindungen der Formel I zeichnen sich durch geringe Flüchtigkeit und gute Wasserlöslichkeit aus.

Mit den erfindungsgemässen Verbindungen wird ein breites Wirkungsspektrum in der Bekämpfung von tierischen und pflanzlichen Schädlingen geschaffen, woraus sich vielerlei Verwendungsmöglichkeiten, z.B. als Bactericide, Desinfektionsmittel, gegen Schleimbildung in der Papierherstellung, als Fungicide, Insekticide, Akaricide, Herbicide oder Algicide ergeben. Sie sind ideale Produkte für die Wasserbehandlung, zur Kontrolle von Mikroorganismen, zum Reinigen von Kühlwassersystemen und/oder zur Verhinderung von Schleimbildung durch Bakterien. Ausserdem eignen sich die neuen Stoffe ausgezeichnet als industrielle Antimikrobika zum Materialschutz, z.B. Schützen von Holz, Zellstoff und Papier, Textilien und Leder, von Farben, Lacken, Antifoulingfarben und ähnlichen Beschichtungsstoffen, von optischen und anderen Gläsern, Kunststoffen, Gummi und Klebstoffen, von Bohr- und Schneideölen, von Erdöl, Schmierstoffen, Wachsen und Treibstoffen und andern Materialien.

Die Verbindungen werden je nach Verwendungszweck in den dem Fachmann bekannten Konzentrationsbereichen eingesetzt. Die Grenzen der gebräuchlichen Konzentrationen sind durch folgende Werte gegeben: Während in Kühlwasser bereits Konzentrationen im ppm-Bereich genügen, so sind in Antifoulingrezepturen Konzentrationen bis 40 Gew.% üblich.

Die Verbindungen können in reiner Form oder zusammen mit Trägerstoffen als Stäube-, Streu- oder Nebelmittel appliziert werden. Sie können auch in flüssigen Streichmitteln u.ä. suspendiert werden, wobei gegebenenfalls zur Bildung von gleichmässigen Dispersionen, Netzmittel oder Emulgiermittel die gleichmässige Verteilung des Wirkstoffs fördern kann. Es können weitere Biocide wie Insektizide hinzugefügt werden.

Ein bevorzugter Anwendungsbereich sind Schutzanstrichmittel, insbesondere Antifoulingfarben, auf organischer Basis, die neben den üblichen Grund- und Zusatzstoffen 0,5-60 Gew.%, vorzugsweise 3-25 Gew.%, bezogen auf die Gesamtmischung, einer Verbindung der Formel I oder deren Gemische enthalten.

Uebliche Grundstoffe für Antifoulingfarben sind die als Bindemitel bezeichneten und dem Fachmann bekannten Lackrohstoffe wie natürliche und synthetische Harze, homo- und copolymere Produkte mit den Monomeren Vinylchlorid, Vinylidenchlorid, Styrol, Vinyltoluol, Vinylestern, Acrylsäuren und Methacrylsäuren sowie deren Estern, ferner Chlorkautschuk, natürlicher oder synthetischer Kautschuk, gegebenenfalls chloriert oder cyclisiert, auch Reaktionsharze wie Epoxidharze, Polyurethanharze, ungesättigte Polyester, die gegebenenfalls durch Zusatz von Härtern in filmbildende höhermolekulare Produkte überführt werden können.

Die Bindemittel können flüssig sein oder in gelöster Form vorliegen. Bei gelösten Bindemitteln, auch Thermoplasten, kann ein Schutzfilm auch durch Verdampfen des Lösungsmittels gebildet werden. Feste Beschichtungsmittel können z.B. im Pulverbeschichtungsverfahren auf Gegenstände aufgebracht werden. Weitere übliche Grundstoffe sind z.B. Teer, Modifikatoren, Farbstoffe, anorganische oder organische Pigmente, Füllstoffe und Härter.

Es wurde ausserdem gefunden, dass Verbindungen mit der Struktur der Formel I ein für die praktischen Bedürfnisse sehr günstiges Mikrobicid-Spektrum zum Schutze von Kulturpflanzen aufweisen. Kulturpflanzen seien im Rahmen vorliegender Erindung beispielsweise Getreide, Mais, Reis, Gemüse, Zuckerrüben, Soja, Erdnüsse, Obstbäume, Zierpflanzen, Reben, Hopfen, Gurkengewächse (Gurken, Kürbis, Melonen), Solanaceen wie Kartoffeln, Tabak und Tomaten, sowie auch Bananen-, Kakao- und Naturkautschuk-Gewächse.

Mit den Wirkstoffen der Formel I können an Pflanzen oder Pflanzenteilen (Früchte, Blüten, Laubwerk, Stengel, Knollen, Wurzeln) dieser und verwandter Nutzkulturen die auftretenden Pilze oder Bakterien eingedämmt oder vernichtet werden, wobei auch später zuwachsende Pflanzenteile von derartigen Mikroorganismen verschont bleiben. Die Wirkstoffe sind gegen die den folgenden Klassen angehörenden phytopathogenen Pilze wirksam: Ascomycetes (z.B. Erysiphaceae, Fusarium); Basidiomycetes wie Puccinia, Fungi imperfecti (z.B. Cercospora, Septoria); Phycomycetes wie Phytophtora. Ueberdies wirken die Verbindungen der Formel I systemisch. Die Verbindungen der Formel I werden vorteilhaft als Beizmittel zur Behandlung von Saatgut und Vorrat (Früchte, Knollen, Körner) und Pflanzenstecklingen zum Schutz vor Pilzinfektionen sowie gegen im Erdboden auftretende phytopathogene Pilze eingesetzt.

Sie sind ausserdem gegen phytopathogene Bakterien wie z.B. Pseudomonas sp., und Xanthomonas sp. wirksam.

Die Verbindungen der Formel I werden im Pflanzenschutz für sich allein oder zusammen mit geeigneten Trägern und/oder anderen Zuschlagstoffen verwendet. Geeignete Träger und Zuschlagstoffe können fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Binde- oder Düngemitteln.

Der Gehalt an Wirkstoff in handelsfähigen Mitteln liegt zwischen 0,1 bis 90%.

Zur Applikation können die Verbindungen der Formel I in den folgenden Aufarbeitungsformen vorliegen (wobei die Gewichts-Prozentangaben in Klammern vorteilhafte Mengen an Wirkstoff darstellen):
Feste Aufarbeitungsformen: Stäubemittel und Streumittel (bis zu 10%), Granulate, Umhüllungsgranulate, Imprägnierungsgranulate und Homogengranulate, Pellets (Körner) (1 bis 80%).

Flüssige Aufarbeitungsformen:

a) in Wasser dispergierbare Wirkstoffkonzentrate:
Spritzpulver (wettable powders) und Pasten (25-90% in der Handelspackung, 0,01 bis 15% in gebrauchsfertiger Lösung), Emulsions- und Lösungskonzentrate (10 bis 50%; 0,01 bis 15% in gebrauchsfertiger Lösung);

b) Lösungen (0,1 bis 20%); Aerosole.

Die Erfindung umfasst somit ferner Mittel, die die erfindungsgemässen Verbindungen enthalten, sowie die Verwendung der erfindungsgemässen Verbindungen und Mittel zur Bekämpfung von Mikroorganismen, Insekten, Mollusken und Algen im Materialschutz.

Die erfindungsgemäss verwendbaren Biocidgemische können auch weitere Aktivsubstanzen enthalten.

Beispiele dafür sind:

a) Organo-Schwefelverbindungen, z.B. Methylen-dithiocyanat (MBT), Isothiazolone oder 3,5-Dimethyl-tetrahydro-1,3,5-2H-thiadiazin-2-thion (DMTT). Solche Substanzen werden insbesondere gegen Schleimbildung bei der Papierherstellung eingesetzt.

b) Chlorierte Phenole, wie Natrium-pentachlorphenolat. Solche Verbindungen zeichnen sich durch ein breites Wirkungsspektrum aus.

c) Kupfersalze, wie Kupfersulfat, sind in geringen Mengen wirksame Algicide.

d) 2,2-Dibrom-3-nitrilopropionamid (DBNPA) als Algicid, Fungicid und Bactericid.

e) Chlor und Brom sind bekannte, wirksame Algicide und Bactericide, welche insbesondere bei der Wasserbehandlung zum Einsatz gelangen.

f) Bei der Wasserbehandlung sind ausserdem Chlordioxid, Chlorisocyanurate und Hypochlorite gängige Biocide.

g) Holzbiocide

a. Salzgemische auf Basis
- Silicofluoride
- Hydrogenfluoride
- anorg. Borverbindungen
- Chromate
- Fluoride
- Arsen (Oxid, Arsenate)
- Kupfersalze (Sulfat, Naphthenat)
- Zinn- und Zinksalze
- Quecksilberverbindungen

b. Teerölpräparate

c. Organische Wirkstoffe
- Pentachlorphenol
- Phenol
- DDT
- Dieldrin
- Lindan, Gammexan
- chlorierte Naphthaline

h) Desinfektionsmittel

a) Phenol oder Phenolderivate
b) Formaldehyd und/oder sonstige Aldehyde bzw. Derivate
c) Chlor, organ. oder anorganische Substanzen mit aktivem Chlor
d) Amphotenside.

Selbstverständlich können in solchen Formulierungen ausserdem noch weitere Substanzen und Hilfsmitel enthalten sein, wie sie üblicherweise in solchen Zubereitungen mitverwendet werden. Hierzu gehören z.B. kationische oder nichtionische oberflächenaktive Substanzen, Elektrolyte, Komplexbildner, Lösungsvermittler sowie Farb- und Duftstoffe. Diese Zusätze dienen beispielsweise zur Verbesserung des Netzvermögens, der Härtungsstabilität, zur Viskositätseinstellung und zur Erhöhung der Kältestabilität der Lösungen.

Die nachfolgenden Beispiele erläutern die Erfindug näher, ohne ihren Umfang zu begrenzen. Hierin angegebene Prozente (%) bedeuten Gewichtsprozente und Teile Gewichtsteile.

Beispiele von Verbindungen der Formel I sind:

| Bsp. | $R^1_a$ | $R^2_b$ | $R^3_q$ | $X_r$ | $Y_t$ | m.p.(°C) |
|---|---|---|---|---|---|---|
| 1 | Butyl$_3$ | Benzyl$_1$ | Butyl$_3$ | $Cl_2$ | - | 86-88 |
| 2 | Butyl$_3$ | Benzyl$_1$ | Cyclohexyl$_3$ | $Cl_2$ | - | 109-111 |
| 3 | Butyl$_3$ | Tetradecyl$_1$ | Butyl$_3$ | $Cl_2$ | | |
| 4 | Butyl$_3$ | Tetradecyl$_1$ | Cyclohexyl$_3$ | $Cl_2$ | - | Oel |
| 5 | Butyl$_3$ | Tetradecyl$_1$ | Phenyl$_3$ | $Cl_2$ | - | Oel |
| 6 | Butyl$_3$ | p-Nitrobenzyl$_1$ | Cyclohexyl$_3$ | $Cl_1$ | $B_1$ | 116-118 |
| 7 | Butyl$_3$ | 3,4-Dichlorbenzyl$_1$ | Cyclohexyl$_3$ | $Cl_2$ | - | 120-122 |
| 8 | Methylol$_3$ | Laurylbenzyl$_1$ | Butyl$_3$ | $Cl_2$ | - | Oel |
| 9 | Methylol$_3$ | Laurylbenzyl$_1$ | Cyclohexyl$_3$ | $Cl_2$ | - | Wachs |
| 10 | Methylol$_3$ | Laurylbenzyl$_1$ | Phenyl$_3$ | $Cl_2$ | - | Wachs |
| 11 | Butyl$_3$ | Tetradecyl$_1$ | Methyl$_2$ | $Cl_3$ | - | Wachs |
| 12* | Butyl$_3$ | Tetradecyl$_1$ | Methyl$_2$ | $Cl_4$ | - | Oel |
| 13 | Butyl$_3$ | Tetradecyl$_1$ | Methyl$_1$ | $Cl_4$ | - | Oel |
| 14* | Butyl$_3$ | Tetradecyl$_1$ | Methyl$_1$ | $Cl_5$ | - | Oel |
| 15 | Butyl$_3$ | Tetradecyl$_1$ | Butyl$_1$ | $Cl_4$ | - | Wachs |
| 16* | Butyl$_3$ | Tetradecyl$_1$ | Butyl$_1$ | $Cl_5$ | - | Oel |

* : n = 2

In der obenstehenden Tabelle bedeuten Butyl = n-Butyl; Tetradecyl = n-Tetradecyl und Laurylbenzyl = Gemisch aus o-, m-, p-Isomeren.

Beispiel 17: 9,7 Teile Triphenylbenzylphosphoniumchlorid werden in 80 Teilen Methanol gelöst und mit einer Lösung von 10,1 Teilen Tricyclohexylzinnchlorid in 100 Teilen Aceton versetzt. Nach Abziehen der flüchtigen Bestandteile verbleiben 19,8 Teile einer farblosen, kristallinen Substanz mit einem Schmelzpunkt von 193- 195°C. Eine $CDCl_3$ Lösung

der gewonnenen Substanz Triphenylbenzylphosphoniumtricyclohexyldichlorstannat zeigt im $^{119}$SnNMR-Spektrum eine Verschiebung von 48,9 ppm nach höherem Feld verglichen mit Tricyclohexylzinnchlorid.

Beispiel 18: Auf analoge Weise werden Tri-n-butyl-n-tetradecyl-phosphoniumchlorid und Tricyclohexylzinnchlorid zur Umsetzung gebracht. Das dabei entstehende Tri-n-butyl-n-tetradecyl-phosphonium-tricyclohexyldichlorstannat zeigt im $^{119}$SnNMR-Spektrum eine Shift-Verschiebung von 52,7 ppm nach höherem Feld ($CDCl_3$- Lösung) verglichen mit Tricyclohexylzinnchlorid.

Beispiel 19: Auf analoge Weise erhält man Tri-n-butyl-n-hexadexylphosphonium-tricyclohexyl-bromchlorstannat. Die Shift-Verschiebung beträgt bei dieser Substanz 36,1 ppm nach höherem Feld verglichen mit Tricyclohexylzinnchlorid.

<u>Beispiele 20-51</u>: Auf analoge Weise erhält man bei entsprechender Auswahl der Phosphonium- bzw. Zinnkomponente folgende Komplexe:

Tabelle A

| Bsp. | Phosphonium-Kation*) | Stannat Anion*1) | Sn-NMR Shift in $CDCl_3$ [ppm] | NMR-Standard*2) | Eigenschaften oder Schmelzpunkt (°C) |
|---|---|---|---|---|---|
| 20 | Tributyltetradecyl | Dimethyltrichlor | | | hochviskoses Oel |
| 21 | Di-(tributyltetradecyl | Dimethyltetrachlor | | | hochviskoses Oel |
| 22 | Tributyltetradecyl | Methyltetrachlor | | | hochviskoses Oel |
| 23 | Di-tributyltetradecyl | Methylpentachlor | | | hochviskoses Oel |
| 24 | Tributyltetradecyl | Butyltetrachlor | -262,4 | d | Wachs |
| 25 | Di-(tributyltetradecyl | Butylpentachlor | -282,6 | | viskoses Oel |
| 26 | Tetrakis-hydroxymethyl | Tricyclohexyldichlor | | | 122-124 |
| 27 | Tributyltetradecyl | Tributylchlorfluor | - 67,4 | g | hochviskoses Oel |
| 28 | Tributyltetradecyl | Tributyldifluor | - 22,7 | g | hochviskoses Oel |
| 29 | Bis-(tributyl)-decamethylen | Bis-(tributylbromchlor) | | | viskoses Oel |
| 30 | Tributylhexadecyl | Tricyclohexylbromchlor | - 36,1 | b | hochviskos |
| 31 | Tributylmethyl | Tricyclohexyldichlor | -157,4 | b | 78-80 |
| 32 | Tributylmethyl | Tricyclohexyliodchlor | | | 105-106 |
| 33 | Triphenylmethyl | Tricyclohexyliodchlor | - 11,7 | b | 175-176 |
| 34 | Diphenylformylmethyl | Tricyclohexyldichlor | - 19,4 | b | 195-196 |
| 35 | Tetrabutyl | Tricyclohexyldichlor | - 42,7 | b | 136-137 |
| 36 | Tetraphenyl | Tricyclohexylbromchlor | - 25,5 | b | 198-200 |
| 37 | Tributyltetradecyl | Triphenylchlorfluor | | | 171-173 |

| Bsp. | Phosphonium-Kation*1) | Stannat Anion*1) | Sn-NMR Shift in $CDCl_3$ [ppm] | NMR-Standard*2) | Eigenschaften oder Schmelzpunkt (°C) |
|---|---|---|---|---|---|
| 38 | Triphenylcyclopropyl | Tricyclohexylbromchlor | - 20,1 | b | 98-100 |
| 39 | Triethylhydrid | Tricyclohexyldichlor | - 24,3 | b | 140-142 |
| 40 | Triethyllauryl | Tricyclohexylbromchlor | - 47,7 | b | hochviskos |
| 41 | Tributylmethyl | Tributyldichlor | -200,2 | a | Wachs |
| 42 | Tributylmethyl | Tributyliodchlor | - 53,0 | a | hochviskos |
| 43 | Triphenylmethyl | Tributyliodchlor | - 77,1 | a | hochviskos |
| 44 | Tetraphenyl | Tributylbromchlor | -123,9 | a | 121-123 |
| 45 | Tetrabutyl | Tributyldichlor | -153,8 | a | 70-72 |
| 46 | Tributylmethyl | Trimethyldichlor | -223,7 | e | 75-76 |
| 47 | Tributyltetradecyl | Dibutyltrichlor | -242,0 | f | hochviskos |
| 48 | Tetrabutyl | Tributyldifluor | - 62,6 | g | 153-156 |
| 49 | Tetrabutyl | Tributylchlorfluor | - 78,9 | g | 128-129 |
| 50 | Triphenylchlormethyl | Tricyclohexyldichlor | | | 162-164 |
| 51 | Triphenyllauryl | Triphenylbromfluor | | | 177-178 |

*1) Butyl = n-Butyl, Lauryl = n-Lauryl, Tetradecyl = n-Tetradecyl

*2) NMR-Standards: a=Tributylzinnchlorid, b=Tricyclohexylzinnchlorid, c=Triphenylzinnchlorid, d=Butylzinntrichlorid, e=Trimethylzinnchlorid, f=Dibutylzinndichlorid, g=Tributylzinnfluorid

Beispiel 52: Bestimmung der minimalen Hemmkonzentration (MIC) gegen Bakterien

Die in Caso-Pepton-Bouillon (Merck) gewachsenen UNK's (über Nacht bebrütete Kulturen) der Bakterienstämme A-F werden jeweils in Saline 1:1000 verdünnt. Von den Suspensionen wird soviel in Caso-Pepton-Bouillon gegeben, dass die Bakterien erneut 1:1000 verdünnt werden. Die Kulturen werden mit 100 bzw. 300 mg/l der in der Tabelle B angegebenen Phosphoniumstannate behandelt. Nach der Bebrütung von 24 Stunden bei 30°C im Schüttelwasserbad wird aufgrund der Trübung ausgewertet. Die MIC ist die Konzentration, bei der die Bouillon nicht durch Bakterienwuchs trüb wird.

Tabelle B

| MIC (mg/Liter) | Bakterien Stamm*) | | | | | |
|---|---|---|---|---|---|---|
| Stannat Bsp. Nr. | A | B | C | D | E | F |
| 3 | 100 | 100 | 100 | 100 | 100 | 100 |
| 5 | 100 | 100 | 100 | 100 | 100 | 100 |
| 20 | 100 | 100 | 100 | 100 | 100 | 100 |
| 21 | 100 | 100 | 100 | 100 | 100 | 100 |
| 22 | 100 | 100 | 100 | 100 | 100 | 100 |
| 23 | 100 | 100 | 100 | 100 | 100 | 100 |
| 24 | 100 | 100 | 100 | 100 | 100 | 100 |
| 25 | 100 | 100 | 100 | 100 | 100 | 100 |
| 8 | 100 | 100 | >300 | >300 | >300 | 100 |
| 37 | 100 | 100 | 100 | 100 | 100 | 100 |
| 27 | 100 | 100 | 100 | 100 | 1001 | 100 |

*) A: Proteus vulgaris
B: Pseudomonas aeruginosa
C: Enterobacter aerogenes
D: Serratia marcenscens
E: Alkaligenes denitrificans
F: Bacillus subtilis

Aus Tabelle B ist die gute wuchshemmende Wirkung der Verbindungen vor allem auch gegen die schwierig zu bekämpfenden gram-negativen Bakterien zu erkennen.

Beispiel 53: Bestimmung der minimalen Abtötungskonzentration gegen eine Bakterien-Mischkultur

Von den in Caso-Pepton-Bouillon gewachsenen UNK's der verschiedenen Bakterienstämme: Escherichia coli, Bacillus cereus var.mycoides, Staphylococcus aureus, Pseudomonas aeruginosa, Enterobacteraerogenes, Proteus vulgaris werden zur Herstellung der Mischkultur jeweils soviel in Tyrode gegeben, dass eine Endverdünnung von 1/1000 erreicht wird, und die Mischkultur 5 Stunden bei 30°C im Schüttelwasserbad bebrütet.

Danach werden aus den Proben 5µl entnommen und auf Caso-Pepton-Agar getropft. Nach einer erneuten Bebrütung bei 30°C für 24 Stunden wird visuell nach Wuchs ausgewertet.

Wie aus folgender Tabelle zu erkennen, sind die Phosphoniumstannate auch gegen diese schleimbildenden Bakterien hoch baktericid wirksam.

Tabelle C: Abtötung einer Bakterienmischkultur in Tyrode

| | Wuchs | | | |
|---|---|---|---|---|
| Nr. | 10 | 30 | 60 | 100 mg/l |
| 5 | + | (-) | - | - |
| 8 | + | + | + | (+) |
| 24 | + | (+) | - | - |
| 25 | + | - | - | - |
| 3 | + | - | - | - |

+ = Wuchs, keine Abtötung
(+) = Wuchs, weniger Kontrolle (>10 Kolonien), geringe Abtötung
(-) = geringer Wuchs (1-10 Kolonien)
- = kein Wuchs, Abtötung

Beispiel 54: Bestimmung der minimalen Hemmkonzentration (MIC) gegen Pilze

Die Untersuchung wird mit dem bekannten Agar-Inkorporations-Test mit den Pilzen

G Aspergilus niger
H Aspergillus phoenicis
I Penicillium funiculosum
J Alternaria alternata
K Cladosporium cladosporioides
L Candida albicans
M Endomyces geotrichum
N Aureobasidium pullulans
O Chaetomium globosum

im Malzextrakt-Agar (Merck) durchgeführt. Zur Hemmung werden jeweils soviel an den verschiedenen Verbindungen zugegeben, dass Konzentrationen von 10, 50 und 100 ml/l im Agar resultieren. Die zur Hemmung des Wuchses der Pilze (von aufgetropften Pilzspuren ausgehend) benötigten Konzentrationen (mg/l) sind in Tabelle D veranschaulicht.

Tabelle D: Bestimmung der MIC gegen Pilze

| Nr. | Stamm G | H | I | J | K | L | M | N | O |
|---|---|---|---|---|---|---|---|---|---|
| 5 | 10 | 10 | 50 | 10 | 10 | 10 | 10 | 10 | 50 |
| 20 | 50 | 50 | 10 | 50 | 10 | 10 | 10 | 10 | 10 |
| 21 | 50 | 50 | 10 | 50 | 10 | 10 | 10 | 10 | 10 |
| 22 | 50 | 50 | 10 | 50 | 10 | 10 | 10 | 10 | 10 |
| 23 | 50 | 50 | 10 | 50 | 10 | 10 | 10 | 10 | 10 |
| 8 | 10 | 10 | 10 | 10 | 10 | 10 | 10 | 10 | 10 |
| 24 | >100 | >100 | 10 | >100 | 10 | 50 | 50 | 10 | 50 |
| 25 | 100 | >100 | 10 | 100 | 10 | 50 | 10 | 10 | 50 |
| 3 | 10 | 10 | 10 | 10 | 10 | 10 | 10 | 10 | 10 |
| 37 | 10 | 10 | 10 | 10 | - | 10 | 10 | - | 10 |
| 27 | 10 | 10 | 10 | 10 | - | 10 | 10 | - | 10 |
| 45 | 10 | 10 | 10 | 10 | 10 | 10 | 10 | 10 | 10 |
| 1 | 10 | 10 | 10 | 10 | 10 | 10 | 10 | 10 | 10 |

Aus Tabelle D ist zu erkennen, dass die Verbindungen auch hervorragende Fungicide sind.

Beispiel 55: Bestimmung der Wirkung gegen Algen

a) Chlorella vulgaris

Die in Algen-Nährmedien über 14 Tage gewachsene Kultur von Chlorella vulgaris wird in Algen-Nährmedium 1:200 verdünnt. Danach werden jeweils die in Tabelle E angeführten Verbindungen so zugegeben, dass eine Konzentration von 3 mg/l resultiert. Nach 6 Stunden Inkubation werden jeweils 10 µl entnommen und zur Bestimmung der abtötenden Wirkung auf Algen-Agar aufgetropft. Nach einer Bebrütung von 14 Tagen unter Belichtung (14 Stunden Licht-, 10 Stunden Dunkel-Wechsel) wird visuell der Wuchs im Algenmedium (Bestimmung der Wuchshemmung) auf dem Algenagar (Bestimmung der algenabtötenden Wirkung) beurteilt.

Tabell E: Wirkung gegen Chlorella vulgaris

| Nr. | Wuchs im Medium | auf dem Agar |
|---|---|---|
| 5 | 1 | 2 |
| 20 | 1 | 2 |
| 21 | 1 | 2 |
| 22 | 1 | 2 |
| 23 | 1 | 2 |
| 24 | 1 | 2 |
| 25 | 1 | 2 |
| 8 | 1 | 2 |
| 3 | 1 | 2 |
| 37 | 1 | 2 |
| 27 | 1 | 2 |
| 45 | 1 | 2 |
| 1 | 1 | - |

1 = kein Wuchs im Medium, 3 ppm wirken wuchshemmend

2 = kein Wuchs auf dem Agar, 3 ppm haben in 6 Stunden die Algen abgetötet.

b) Enteromorpha intestinalis

Die Untersuchung der Wirkung gegen die beim Meerwasser-Fouling wichtigste Grünalge Enteromorpha erfolgt in steril filtriertem Meerwasser, welches eine Erd-Schreiber-Lösung enthält. Diese Lösung setzt sich aus einem Nährstoffextrakt, Phosphat und Nitrat zusammen. Die Bebrütung von Enteromorpha intestinalis findet im Lichtthermostaten bei 18°C unter einem 14 Stunden-Licht- 10 Stunden Dunkelwechsel statt.

Die auf diese Weise gezüchteten Algen werden den zu untersuchenden Produkten für kurze Zeit (4 Stunden) in Meerwasser ausgesetzt. Die minimale Abtötungskonzentration (MKC) wird dadurch bestimmt, dass man die Algen, nach der Einwirkungszeit einer bestimmten Menge Algizid enthaltenden Meerwassers, diesem entnimmt, sie wäscht, und nach 6-bis 8-wöchiger erneuter Bebrütung in frischem Meerwasser auf Wuchs bzw. Abtötung untersucht.

Die minimale Abtötungskonzentration (MKC) gibt die Stoffmenge an, die notwendig ist, die Alge innerhalb einer bestimmten Zeit so zu schädigen, dass sie sich in frischem Meerwasser nicht mehr erholen kann und abstirbt.

Zur Bestimmung der Hemmkonzentration (MIC) befindet sich die Alge während der gesamten Versuchsdauer in Biocid enthaltendem Meerwasser (getestete Konzentration 0,1 und 0,5 mg/l).

Tabelle F Wirkung gegen Enteromorpha intestinalis

| Nr. | Abtötung 5 mg/l | MIC (mg/l) |
|---|---|---|
| 5 | ja | 0,5 |
| 20 | ja | >0,5 |

Wie aus Tabelle E und F zu erkennen, haben die Verbindungen eine ausgeprägte algistatische und algicide Wirkung gegen Süsswasseralgen (z.B. Behandlung von Kühlwasser) und Meerwasseralgen (z.B. Bewuchsschutz für Antifouling-Farben).

Beispiel 56: Bestimmung der Wirkung gegen Artemia salina

Die im Handel erhältlichen Eier werden bei starker Durchlüftung zum Schlüpfen gebracht. Die 2-3 Tage alten Nauplien werden dann in synthetischem Meerwasser den Produkten mit verschiedener Konzentration (getestete Konzentration 2,5; 1,5 und 0,25 mg/l) ausgesetzt und über einen längeren Zeitraum beobachtet.

Tabelle G Wirkung gegen Artemia salina (ca 30-50 Nauplien)

| Nr. | 2,5 mg/l | | | 1 mg/l | | | 0,5 mg/l | | | 0,25 mg/l | | |
|---|---|---|---|---|---|---|---|---|---|---|---|---|
| | 6 h | 24 h | 48 h | 6 h | 24 h | 48 h | 6 h | 24 h | 48 h | 6 h | 24 h | 48 h |
| 2 | 3 | 3 | 3 | 2-3 | 3 | 3 | 2-3 | 3 | 3 | 2 | 3 | 3 |
| 5 | 2-3 | 3 | 3 | 2 | 3 | 3 | 1-2 | 2-3 | 3 | 1-2 | 3 | 3 |
| 20 | 1-2 | 3 | 3 | 2 | 2-3 | 3 | 1 | 2 | 3 | 0 | 1-2 | 2-3 |
| 21 | 1-2 | 3 | 3 | 1-2 | 3 | 3 | 1-2 | 2 | 3 | 1-2 | 3 | 3 |
| 22 | 1-2 | 3 | 3 | 1-2 | 3 | 3 | 1-2 | 3 | 3 | 0 | 1-2 | 2-3 |
| 23 | 1-2 | 3 | 3 | 1-2 | 3 | 3 | 1-2 | 2-3 | 3 | 0 | 1-2 | 2-3 |

0 = wie Kontrolle

1 = geringe Veränderung

1-2 = Nauplien angegriffen

2 = Nauplien stark angegriffen

2-3 = fast alle Nauplien tot

3 = alle Nauplien tot

Aus Tabelle G ist die hervorragende Wirkung der Verbindungen gegen den Salinenkrebs zu erkennen. Artemia salina ist ein Verwandter der Balaniden, die die grossen Probleme bei dem Bewuchs der Schiffe verursachen.

Wegen der Wirksamkeit gegen Algen sowie gegen Krebstiere sind die Verbindungen u.a. zur Ausrüstung der Schiffsfarben geeignet.

Wegen des breiten Wirkungsspektrums, Aktivität gegen Bakterien, Algen, Pilze und Krebstiere, sind diese Verbindungen generell für den Materialschutz, wie z.B. Dispersionsfarben, Antifouling-Farben, Wasserbehandlung, Holzschutz, Bohr- und Schneidöle, Kunststoffe, Papierindustrie u.a. verwendbar.

Beispiel 57.1: Wirkung gegen Phytophtora infestans auf Tomatenpflanzen

a) Residuale-kurative Wirkung

Tomatenpflanzen wurden nach 3-wöchiger Anzucht mit einer Sporangiensuspension des Pilzes infiziert. Nach einer Inkubation von 22 Stunden in einer Feuchtkammer bei 90-100% relativer Luftfeuchtigkeit und 20°C wurden die infizierten Pflanzen getrocknet und mit einer aus Spritzpulver des Wirkstoffs hergestellten Spritzbrühe (0,06% Aktivsubstanz) besprüht. Nach dem Antrocknen des Spritzbelages wurden die behandelten Pflanzen wieder in die Feuchtkammer gebracht. Die Beurteilung des Pilzbefalles erfolgte 5 Tage nach der Infektion.

b) Systemische Wirkung

Zu Tomatenpflanzen wurde nach 3-wöchiger Anzucht eine aus Spritzpulver des Wirkstoffes hergestellte Spritzbrühe gegossen (0,006% Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90-100% relativer Luftfeuchtigkeit und 20°C.

Beispiel 57.2: Wirkung gegen Cercospora arachidicola auf Erdnusspflanzen (residual-protetktive Wirkung)

10-15 cm hohe Erdnusspflanzen wurden mit einer aus Spritzpulver der Wirksubstanz hergestellten Spritzbrühe (0,02% Aktivsubstanz) besprüht und 48 Stunden später mit einer Konidiensuspension des Pilzes infiziert. Die infizierten Pflanzen wurden während 72 Stunden bei ca. 21°C und hoher Luftfeuchtigkeit inkubiert und anschliessend bis zum Auftreten der typischen Blattflecken in einem Gewächshaus aufgestellt. Die Beurteilung der fungiciden Wirkung erfolgte 12 Tage nach der Infektion basierend auf Anzahl und Grösse der auftretenden Flecken.

Beispiel 57.3: Wirkung gegen Erysiphe graminis auf Gerste (Residual-protektive Wirkung)

Ca. 8 cm hohe Gerstenpflanzen wurden mit einer aus Spritzpulver des Wirkstoffes hergestellten Spritzbrühe (0,02% Aktivsubstanz) besprüht. Nach 3-4 Stunden wurden die behandelten Pflanzen mit Konidien des Pilzes bestäubt. Die infizierten Gerstenpflanzen wurden in einem Gewächshaus bei ca. 22°C aufgestellt und der Pilzbefall nach 10 Tagen beurteilt.

Verbindungen der Formel I zeigten in den vorhergehenden Versuchen eine gute fungicide Wirkung. So wurde z.B. bei den nachfolgend aufgeführten Verbindungen der Befall auf weniger als 20% gehemmt im Vergleich mit unbehandelten Kontrollpflanzen (Befall = 100%).
Bei Phytophtora infestans: Nr. 5, 18 und 9.
Bei Cercospora arachidicola: Nr. 5, 7 und 9.
Bei Erysiphe graminis: Nr. 7.

Beispiel 58: Residual-protektive Wirkung gegen Venturia inaequalis auf Apfeltrieben

Apfelstecklinge mit 10-20 cm langen Frischtrieben wurden mit einer aus Spritzpulver des Wirkstoffes hergestellten Spritzbrühe (0,02% Aktivsubtanz) besprüht. Nach 24 Stunden wurden die behandelten Pflanzen mit einer Konidiensuspension des Pilzes infiziert. Die Pflanzen wurden dann während 5 Tagen bei 90-100% relativer Luftfeuchtigkeit inkubiert und während 10 weiteren Tagen in einem Gewächshaus bei 20-24°C aufgestellt. Der Schorfbefall wurde 15 Tage nach der Infektion beurteilt. Die Verbindungen Nr. 18, 5 und 9 und andere hemmten den Krankheitsbefall auf weniger als 10%. Unbehandelte aber infizierte Triebe zeigten einen 100%igen Venturia-Befall.

Beispiel 59: Wirkung gegen Schimmelpilze an Feuchtmais

Trockene Maiskörner (Portionen à 80 g) wurden in verschliessbaren Plastikbechern mit der Prüfsubstanz in Form einer wässrigen Suspension, Emulsion oder Lösung durchgemischt. Die Substanzapplikation wurde so bemessen, dass eine Konzentration von 0,06% AS bezüglich dem Maistrockengewicht erreicht wurde. Ein befeuchteter Papierlappen sorgte für eine feuchtigkeitsgesättigte Atmosphäre in den verschlossenen Bechern. Nach 2-3 Wochen Inkubation bei ca. 20°C entwickelte sich bei den nur mit Wasser behandelten Mais-Proben spontan eine Mischpopulation von Schimmelpilzen. Eine künstliche Infektion erübrigte sich. Das Ausmass der Pilzentwicklung nach 3 Wochen diente zur Bewertung der Wirksamkeit der Prüfsubstanz.

Bei Behandlung mit Verbindungen der Formel I, wie z.B. Nr. 1 und 8, wurde der Befall auf weniger als 20% gehemmt im Vergleich mit den Kontrollen.

Beispiel 60: Bewuchs von Holz

Holzklötzchen aus Fichte, 7x10x10 mm gross, werden 30 Minuten im Vakuum getrocknet. Dann werden die Klötzchen vakuumimprägniert, indem sie in 20 ml destilliertem Wasser und Biocid für 30 Minuten im Vakuum belassen werden und danach für 18 Stunden im Wasser einer Druckbehandlung (2 atü durch Pressluft) ausgesetzt. Die so behandelten Holzstücke werden entweder sofort getrocknet oder erst einer Auslaugung in fliessendem Wasser unterworfen und dann getrocknet.

Die getrockneten Holzstückchen werden auf Kartoffel-Glucose-Agar gelegt und das Holz sowie der umliegende Agar mit 0,1 ml einer Sporensuspension von Aureobasidium pullans angeimpft. Nach 4-wöchiger Bebrütung bei 28°C wird der Wuchs nach folgendem Schema ausgewertet.

1 = Wuchs auf dem Holz, wie unbehandelte Probe

2 = Wuchs auf dem Holz, schwächer als Kontrolle

3 = kein Wuchs auf dem Holz

4 = kein Wuchs auf dem Holz, Hemmzone bis 2 mm

5 = kein Wuchs auf dem Holz, Hemmzone >2 mm.

| Substanz | Konz. % $H_2O$ | ungewässert | 5 Tage ausgelaugt |
|---|---|---|---|
| 5 | 0,05 | 5 | 3-4 |
| | 0,01 | 4 | 2 |
| 26 | 0,05 | 5 | 5 |
| | 0,01 | 5 | 4 |
| 3 | 0,05 | 5 | 5 |
| | 0,01 | 5 | 4 |

Aus der Tabelle ist die hervorragende Wirkung der Verbindungen im Holzschutz, auch noch nach Wasserlagerung, zu erkennen.

Patentansprüche

1. Phosphoniumstannate der allgemeinen Formel I

$$[(R^1)_a(R^2)_bP]_n^{\oplus} [R^3_qSnX_rY_t]_w^{n\ominus} \qquad (I),$$

worin $R^1$ $C_1$-$C_6$ Alkyl, durch eine Hydroxy- oder Cyanogruppe oder eine oder zwei $C_2$-$C_{22}$ Alkoxycarbonyl- oder $C_2$-$C_{22}$ Alkylcarbonyloxygruppen oder durch ein Halogenatom substituiertes $C_1$-$C_6$ Alkyl bedeutet, $C_3$-$C_7$ Cycloalkyl oder Phenyl ist, und $R^2$ Wasserstoff, $C_8$-$C_{22}$ Alkyl, Methylol oder durch eine oder zwei $C_1$-$C_{14}$ Alkylgruppen, durch ein oder zwei Chloratome oder durch eine oder zwei Nitrogruppen substituiertes Benzyl bedeutet oder Benzyl ist, mit der Massgabe, dass $R^1$ nicht Phenyl und $R^3_3$ nicht Methyl, Ethyl, n-Propyl, n-Butyl oder Phenyl ist, oder worin $R^2$ eine Gruppe der Formel II $-ZPR^1_3$ (II) ist, worin $R^1$ die oben angegebene Bedeutung hat und Z eine geradkettige oder verzweigte ($C_{2-22}$-$H_{4-44}$)-Gruppe ist, welche ein- oder mehrmals durch -O-, -S-, -O-C(O)-, -C(O)-O- oder -N($R^4$) unterbrochen sein kann, wobei $R^4$ Wasserstoff oder $C_1$-$C_4$ Alkyl bedeutet, und $R^3$ die gleiche Bedeutung wie $R^1$ hat, oder ferner Benzyl, durch eine oder zwei $C_1$-$C_{14}$ Alkylgruppen, durch ein oder zwei Chloratome oder durch eine oder zwei Nitrogruppen substituiertes Benzyl oder 2-Methyl-2-phenylpropyl ist, mit der Massgabe, dass die Reste $R^1$ und/oder $R^3$ von Phenyl verschieden sind, wenn X und/oder Y kein Fluor ist, und X und Y unabhängig voneinander Fluor, Chlor, Brom, Iod, Cyanat, Thiocyanat oder Carboxylat der Formel $R^5$-COO- bedeuten, wobei $R^5$ Wasserstoff ist, oder geradkettiges oder verzweigtes $C_1$-$C_{18}$ Alkyl bedeutet, das gegebenenfalls durch ein bis drei Halogenatome oder durch ein bis drei Hydroxy- oder Aminogruppen substituiert sein kann, oder Phenyl ist, das gegebenenfalls durch ein bis drei Halogenatome oder durch ein bis drei Amino-, Nitro-, Hydroxy- oder $C_1$-$C_4$ Alkoxygruppen substituiert ist, oder $C_5$-$C_8$ Cycloalkyl bedeutet oder ein gegebenenfalls substituiertes Pyridin ist, und worin n 1 oder 2 ist, und q 1, 2 oder 3 bedeutet, und a die Werte 3 oder 4 annehmen kann, wobei der Wert 4 nur dann erlaubt ist, wenn X und/oder Y Fluor ist, und b die Werte 1 oder 4 annehmen kann,

wobei der Wert 4 nur dann erscheint, wenn X und/oder Y Fluor ist, und die Summe (a+b) stets 4 sein muss, und r und t eine ganze Zahl von 0 bis 5 ist, wobei die Summe (r+t) 2 bis 5 ist, und die Summe (q+r+t) dem Wert (n+4) entspricht und w, falls $R^2$ eine Gruppe der Formel II ist, 2 bedeutet und sonst 1 ist.

2. Verbindungen gemäss Anspruch 1 der Formel I, worin $R^3$ $C_1$-$C_6$ Alkyl, $C_1$-$C_6$ Mono- oder Dihy$_d$ro$_x$yalkyl, $C_3$-$C_7$ Cycloalkyl oder 2-Methyl-2-phenylpropyl ist.

3. Verbindungen gemäss Anspruch 1 der Formel I, worin $R^1$ n-Butyl, Methylol oder Phenyl ist und $R^2$ $C_8$-$C_{16}$ Alkyl, 3,4-Dichlorbenzyl oder p-Nitrobenzyl bedeutet und $R^3$ $C_1$-$C_4$ Alkyl, Cyclohexyl oder Phenyl ist, mit der Massgabe, dass die Reste $R^1$ und/ oder die Reste $R^3$ von Phenyl verschieden sind, wenn X und/oder Y kein Fluor ist.

4. Verbindungen gemäss Anspruch 1 der Formel I, worin $R^1$ und $R^3$ n-Butyl sind, $R^2$ $C_{12}$-$C_{16}$ Alkyl ist und X und Y unabhängig voneinander Fluor oder Chlor bedeuten.

5. Verbindungen gemäss Anspruch 1 der Formel I, worin $R^1$ und $R^3$ n-Butyl, $R^2$ Tetradecyl, X und Y unabhängig voneinander Fluor oder Chlor bedeuten, q 3 ist, und n, r und t 1 sind.

6. Verbindungen gemäss Anspruch 1 der Formel I, worin $R^1$ und $R^3$ n-Butyl, $R^2$ Tetradecyl, X und Y Fluor oder Chlor, q 3 ist, n und r 2 bedeuten und t 1 ist.

7. Verbindungen gemäss Anspruch 1 der Formel I, worin $R^2$ eine Gruppe der Formel II ist.

8. Verbindungen gemäss Anspruch 1 der Formel I, worin q 3 ist.

9. Verbindungen gemäss Anspruch 1 der Formel I, worin X und/oder Y Fluor sind.

10. Verbindungen gemäss Anspruch 1 der Formel I, worin X und/oder Y Chlor sind.

11. Verbindungen gemäss Anspruch 1 der Formel I, worin X und/oder Y Brom sind.

12. Verbindungen gemäss Anspruch 1 der Formel I, bei denen die Reste X und/oder Y Carboxylate der Formel $R^5$-COO- sind.

13. Verbindungen gemäss Anspruch 1 der Formel I, worin $R^1$ und $R^3$ n-Butyl sind, $R^2$ Tetradecyl ist, X und Y Fluor oder Chlor bedeuten, und wo n, q, r und t 2 sind.

14. Verbindungen gemäss Anspruch 1 der Formel I, worin $R^1$ und $R^3$ n-Butyl sind, $R^2$ Tetradecyl bedeutet, X und Y Fluor oder Chlor sind, und wo n, q und t 1 bedeuten und r den Wert 3 annimmt.

15. Verbindungen gemäss Anspruch 1 der Formel V, bei denen der Rest $R^2$ $C_{12}$-$C_{14}$ Alkyl ist

$$[(C_4H_9)_3PR^2]^{\oplus} [(C_4H_9)_3SnCl_2]^{\ominus} \quad (V) .$$

16. Verbindungen gemäss Anspruch 1 der Formel VI, bei denen $R^2$ $C_{12}$-$C_{14}$ Alkyl bedeutet

$$[(C_4H_9)_3PR^2]^{\oplus} [(C_4H_9)_3SnF_2]^{\ominus} \quad (VI) .$$

17. Verbindungen gemäss Anspruch 1 der Formel VII, bei denen der Rest $R^2$ $C_{12}$-$C_{14}$ Alkyl ist

$$[(C_6H_5)_3PR^2]^{\oplus} [(C_4H_9)_3SnCl_2]^{\ominus} \quad (VII) .$$

18. Verbindungen gemäss Anspruch 1 der Formel VIII, bei denen der Rest $R^2$ $C_{12}$-$C_{14}$ Alkyl bedeutet

$[(C_6H_5)_3PR^2]^{\oplus}\ [(C_4H_9)_3SnF_2]^{\ominus}$ (VIII).

19. Verfahren zur Herstellung von Phosphonium-Stannaten der Formel I gemäss Anspruch 1 durch Umsetzung von ungefähr n/w Mol eines Phosphoniumsalzes der Formel III

$$[R^1_3R^2P]^{\oplus}X^{\ominus} \qquad (III),$$

worin $R^1$, $R^2$ und X die im Anspruch 1 angegebene Bedeutung haben, mit ungefähr einem Mol eines Zinnsalzes der Formel IV

$$R^3_qSnY_t \qquad (IV),$$

worin $R^3$, Y, q und t die im Anspruch 1 angegebene Bedeutung haben, hergestellt werden.

20. Mittel enthaltend als aktive Komponente mindestens eine Verbindung der Formel I gemäss Anspruch 1.

21. Verwendung der Verbindungen der Formel I gemäss Anspruch 1 als Biocide.

22. Verwendung gemäss Anspruch 21 als Fungicide.

23. Verwendung gemäss Anspruch 21 zum Schutz von Kulturpflanzen.

24. Verwendung gemäss Anspruch 21 zum Materialschutz.

25. Verwendung gemäss Anspruch 21 als Algicide, Insekticide oder Mulloscide.

26. Verwendung gemäss Anspruch 21 in Kühlkreisläufen.

27. Verwendung gemäss Anspruch 21 in Antifoulingfarben.

28. Verwendung gemäss Anspruch 21 in Desinfektionsmitteln.

29. Verwendung gemäss Anspruch 21 als Bactericide.

FO 7.3/ACK/gs*